# EUROPEAN PATENT APPLICATION

(11) **EP 4 678 439 A1**
(43) Date of publication of application: **14.01.2026**
(21) Application number: 25184064.1
(22) Date of filing: 19.06.2025
(51) Int. Cl.: B60K 6/383, B60K 6/387, B60K 6/40, B60K 6/405

(54) **POWER TRANSMISSION DEVICE FOR HYBRID VEHICLE**

(30) Priority: 11.07.2024 JP 2024111772
(71) Applicant: Suzuki Motor Corporation, Shizuoka 432-8611 (JP)
(72) Inventor: NAKA, Daisuke, HAMAMATSU-SHI, 432-8611 (JP); ANDO, Hideto, HAMAMATSU-SHI, 432-8611 (JP)
(74) Representative: Plasseraud IP

(57) **Abstract**

[Problem to be solved]

There is provided a power transmission device (4) for a hybrid vehicle that can restrain thickness of a case body accommodating a clutch (26), a release member (36), and a reduction gear pair (28, 35) from increasing and restrain the power transmission device (4) from increasing in size.

[Solution]

A case member (21) of a power transmission device (4) has a case body portion (21A) that accommodates a damper (22), a wet clutch (26), a drive gear (35), a driven gear (28), and a release mechanism (36), and a bulge portion (21B) that bulges outward in a radial direction from the case body portion (21A) and accommodates a driven plate (37A) that is a part of the release mechanism (36), a motor generator (2) is disposed on one side of the bulge portion (21B) outside the case member (21), and an actuator (motor (41)) is disposed on the other side of the bulge portion (21B) on an opposite side to the motor generator (2).

## Description

### [Technical Field]

The present invention relates to a power transmission device for a hybrid vehicle.

### [Background Art]

There is known a hybrid drive module that is provided between an internal combustion engine and a transmission and transmits power of the internal combustion engine and an electric motor to the transmission (see Patent Literature 1).

This hybrid drive module is provided between the internal combustion engine and the transmission, and includes a clutch that connects and disconnects the power that is transmitted from the engine to the transmission, the electric motor, a first sprocket, a chain and a second sprocket that transmit the power of the electric motor to the transmission.

### [Citation List]

### [Patent Literature]

[Patent Literature 1] JP2019-528206A

### [Summary of Invention]

### [Technical Problem]

Incidentally, when connecting and disconnecting the clutch by using an actuator, it is necessary to incorporate the actuator into the hybrid drive module. Furthermore, the electric motor is incorporated into the hybrid drive module.

If the actuator and the electric motor are incorporated into the hybrid drive module, there is a possibility that the thickness of the case of the hybrid drive module may increase by an amount of the actuator and the electric motor being incorporated therein, and the hybrid drive module may be increased in size.

The present invention is made in light of the above-described circumstances and has an object to provide a power transmission device for a hybrid vehicle capable of restraining thickness of a case body that accommodates a clutch, a release member, and a reduction gear pair from increasing and restraining the power transmission device from increasing in size.

### [Solution to Problem]

The present invention is a power transmission device for a hybrid vehicle, the power transmission device being disposed between an internal combustion engine and a transmission, the power transmission device including a clutch that can connect and disconnect transmission of power between the internal combustion engine and the transmission, a reduction gear pair that transmits power between a rotating electric machine and the transmission, a release member that connects and disconnects the clutch, an actuator that operates the release member, and a case member, characterized in that the case member has a case body portion that accommodates the clutch, the reduction gear pair, and the release member, and a bulge portion that bulges outward in a radial direction from the case body portion and accommodates a part of the release member, the rotating electric machine is disposed on one side of the bulge portion outside the case member, and the actuator is disposed on the other side of the bulge portion on an opposite side to the rotating electric machine.

### [Advantageous Effect of Invention]

As above, according to the above-described present invention, it is possible to restrain the thickness of the case body that accommodates the clutch, the release member, and the reduction gear pair from increasing and restrain the power transmission device from increasing in size.

### [Brief Description of Drawings]

[Figure 1] Figure 1 is a rear view of an internal combustion engine and a transmission including a power transmission device according to one example of the present invention.
[Figure 2] Figure 2 is a top view of the internal combustion engine and the transmission including the power transmission device according to the one embodiment of the present invention.
[Figure 3] Figure 3 is a right side view of the internal combustion engine and the transmission including the power transmission device according to the one embodiment of the present invention.
[Figure 4] Figure 4 is a rear view of the power transmission device according to the one embodiment of the present invention and a right case.
[Figure 5] Figure 5 is a vertical sectional view of the power transmission device according to the one embodiment of the present invention and the right case, which corresponds to a sectional view along a direction of arrows V to V in Figure 6.
[Figure 6] Figure 6 is a left side view of the power transmission device according to the one embodiment of the present invention and the right case.
[Figure 7] Figure 7 is a right side view of the power transmission device according to the one embodiment of the present invention.
[Figure 8] Figure 8 is a schematic configurational diagram of the power transmission device of the present invention.
[Figure 9] Figure 9 is a rear view of the internal combustion engine and a transmission (four-wheel drive) of another aspect including the power transmission device according to the one embodiment of the present invention.
[Figure 10] Figure 10 is a right side view of the power transmission device according to the one embodiment of the present invention and the transmission (four-wheel drive) of the other aspect.

### [Description of Embodiment]

A power transmission device for a hybrid vehicle according to one embodiment of the present invention is a power transmission device for a hybrid vehicle, the power transmission device being disposed between an internal combustion engine and a transmission, the power transmission device including a clutch that can connect and disconnect transmission of power between the internal combustion engine and the transmission, a reduction gear pair that transmits power between a rotating electric machine and the transmission, a release member that connects and disconnects the clutch, an actuator that operates the release member, and a case member, wherein the case member has a case body portion that accommodates the clutch, the reduction gear pair, and the release member, and a bulge portion that bulges outward in a radial direction from the case body portion and accommodates a part of the release member, and the rotating electric machine is disposed on one side of the bulge portion outside the case member, and the actuator is disposed on the other side of the bulge portion on an opposite side to the rotating electric machine.

Accordingly, the power transmission device for a hybrid vehicle according to one embodiment of the present invention can restrain a thickness of the case body that accommodates the clutch, the release member, and the reduction gear pair from increasing and restrain the power transmission device from increasing in size.

### [Embodiment]

Hereinafter, the power transmission device for a hybrid vehicle according to one embodiment of the present invention will be described by using the drawings.

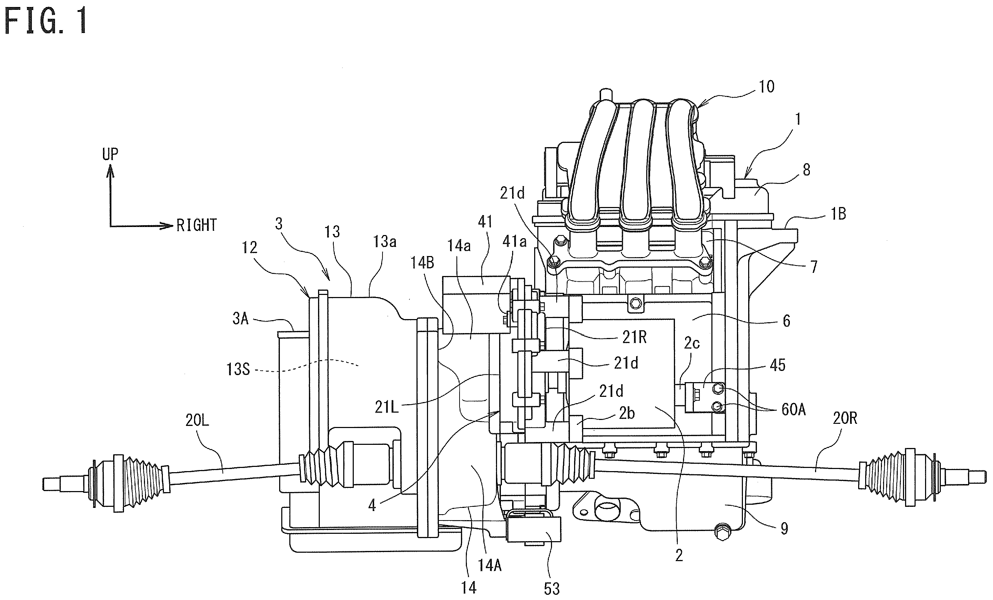

Figure 1 to Figure 10 are views and a diagram showing the power transmission device for a hybrid vehicle according to one embodiment of the present invention.

First, a configuration will be described.

In Figure 1 to Figure 10, up-down, front-rear, and left-right directions are defined based on the power transmission device in a state of being disposed in a hybrid vehicle, a front-rear direction of the hybrid vehicle is defined as a front-rear direction, a left-right direction (vehicle width direction) of the hybrid vehicle is defined as a left-right direction, and an up-down direction (height direction of the hybrid vehicle) of the hybrid vehicle is defined as an up-down direction.

As shown in Figure 1, the hybrid vehicle has an internal combustion engine 1, a motor generator 2 as a rotating electric machine, and a transmission 3. A power transmission device 4 is disposed between the internal combustion engine 1 and the transmission 3.

The power transmission device 4 has the internal combustion engine 1 attached to one side, and the transmission 3 attached to the other side, and joins the internal combustion engine 1 and the transmission 3.

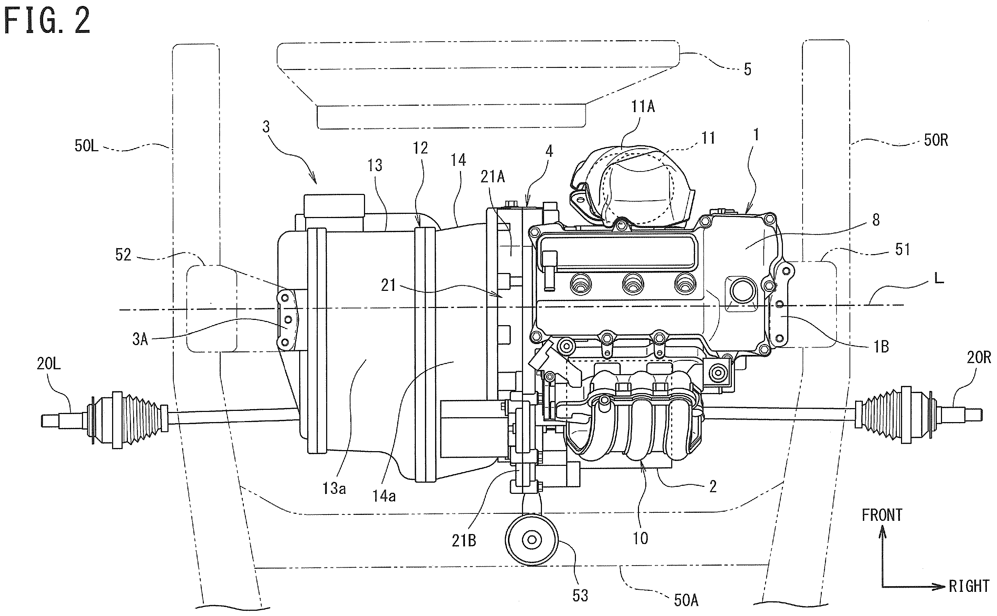

As shown in Figure 2, a radiator 5 is disposed in front of the internal combustion engine 1, and the radiator 5 performs heat exchange with the internal combustion engine 1 via coolant through piping not illustrated.

As shown in Figure 1, the internal combustion engine 1 is configured by including a cylinder block 6, a cylinder head 7 that is attached to an upper portion of the cylinder block 6, a cylinder head cover 8 that is attached to an upper portion of the cylinder head 7, and an oil pan 9 that is attached to a lower portion of the cylinder block 6 and stores oil.

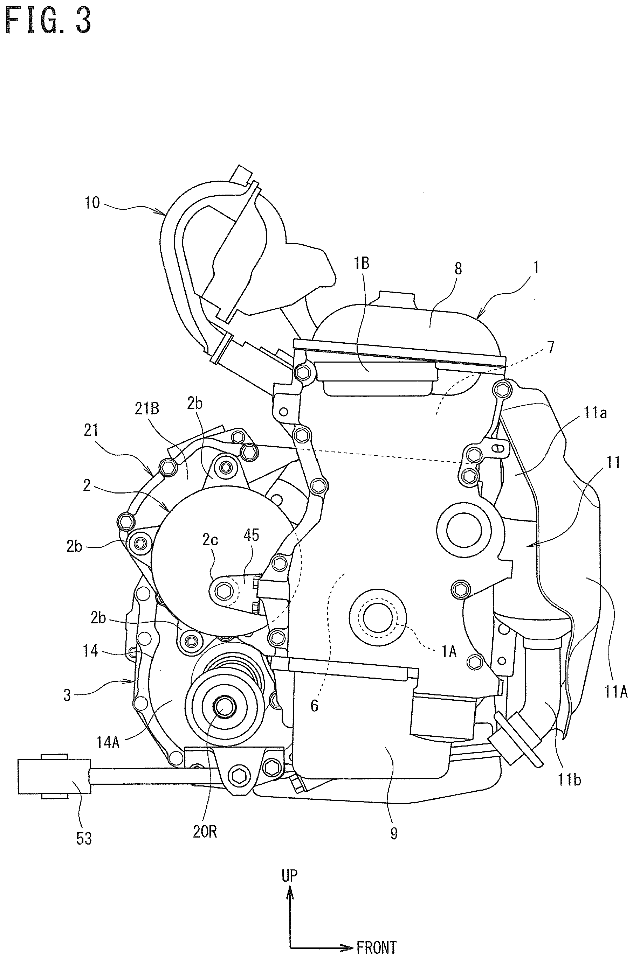

In the internal combustion engine 1, a crankshaft 1A (see Figure 3) extending to left and right is rotatably accommodated. The internal combustion engine 1 burns fuel to convert thermal energy into mechanical energy, thereby rotates the crankshaft 1A about a rotation central axis and transmits power to the transmission 3 via the power transmission device 4.

As shown in Figure 1 and Figure 3, an intake manifold 10 is connected to a rear surface of the cylinder head 7, that is, a rear surface of the internal combustion engine 1. The intake manifold 10 is located rearward of the cylinder head 7 and the cylinder head cover 8, and from a height position of the cylinder head 7 to above the cylinder head cover 8.

In the cylinder head 7, intake ports and exhaust ports, both of which communicate with cylinders in the cylinder block 6, are formed. The intake manifold 10 distributes air that is taken in from an intake pipe not illustrated to a plurality of intake ports.

As shown in Figure 3, an exhaust pipe 11a is attached to a front surface of the cylinder head 7.
The exhaust pipe 11a extends in the up-down direction from the height position of the cylinder head 7, passing in front of the cylinder block 6. A catalyst converter 11 is connected to a portion extending in the up-down direction of the exhaust pipe 11a, and the catalyst converter 11 is disposed in front of the cylinder block 6.

In other words, the catalyst converter 11 is disposed on a front surface of the internal combustion engine 1. The radiator 5 is disposed in front of the catalyst converter 11 (see Figure 2), and a front surface of the catalyst converter 11 is covered with a heat shield cover 11A.

In the cylinder head 7, an exhaust manifold not illustrated is formed, and the exhaust manifold collectively discharges exhaust gas that is discharged from a plurality of cylinders to the exhaust pipe 11a. The exhaust gas discharged to the exhaust pipe 11a flows into the catalyst converter 11.

The catalyst converter 11 oxidizes and reduces HC (hydrocarbons), CO (carbon monoxide), NOx (nitrogen oxides), and the like contained in the exhaust gas for purification. The exhaust gas that has passed through the catalyst converter 11 is discharged to an exhaust pipe 11b connected to a downstream end of the catalyst converter 11, thereafter, is silenced by a silencer not illustrated, and is released to the atmosphere.

As shown in Figure 1, the transmission 3 includes a transmission case 12, and the transmission case 12 includes a left case 13, and a right case 14 that is disposed to be closer to the internal combustion engine 1 than the left case 13, and is fastened to the left case 13 by a bolt not illustrated.

The internal combustion engine 1, the power transmission device 4, and the transmission 3 are disposed side by side in the vehicle width direction, and the hybrid vehicle of the present embodiment is an FF (front engine, front wheel drive) vehicle.

A right end portion (one end portion in the vehicle width direction of the transmission 3) of the right case 14 is connected to a left end portion (one end portion in the vehicle width direction) of the internal combustion engine 1 via the power transmission device 4.

As shown in Figure 2, a right side member 50R is provided on a right side with respect to the internal combustion engine 1, and the right side member 50R extends in the front-rear direction.

A mount attaching portion 1B is provided at a right end portion (other end portion in the vehicle width direction) of the internal combustion engine 1.
An internal combustion engine side mount device 51 is connected to the mount attaching portion 1B, and the internal combustion engine 1 is elastically supported by the right side member 50R via the internal combustion engine side mount device 51.

A left side member 50L is provided on a left side with respect to the transmission 3, and the left side member 50L extends in the front-rear direction.

A mount attaching portion 3A is provided at a left end portion (the other end portion in the vehicle width direction) of the transmission 3. A transmission side mount device 52 is connected to the mount attaching portion 3A, and the transmission 3 is elastically supported by the left side member 50L via the transmission side mount device 52.

In other words, the right side member 50R and the left side member 50L are provided outward of the internal combustion engine 1 and the transmission 3 in the vehicle width direction, and the internal combustion engine 1 and the transmission 3 are elastically supported by the right side member 50R and the left side member 50L by the internal combustion engine side mount device 51 and the transmission side mount device 52. The left side member 50L and the right side member 50R of the present embodiment form a vehicle body.

A front end portion of a torque rod 53 is attached to the right case 14 (see Figure 3), and a rear end portion of the torque rod 53 is elastically supported by a cross member 50A that connects the left and right side members 50L and 50R in the vehicle width direction. The torque rod 53 absorbs oscillations and vibrations in the front-rear direction of the internal combustion engine 1 and the transmission 3.

In detail, the torque rod 53 suppresses vibrations (oscillations) of the internal combustion engine 1 and the transmission 3 in a rotation direction around an axis, which are to rotationally vibrate around the axis (virtual straight line L) passing through the internal combustion engine side mount device 51 and the transmission side mount device 52.

As shown in Figure 1, an upper wall 14a of the right case 14 is located at a position lower than an upper wall 13a of the left case 13, and the cylinder head cover 8 is located at a position higher than the upper wall 13a of the left case 13.

As shown in Figure 3, a differential device accommodation portion 14A that accommodates a differential device 16 described later is formed in the right case 14, and the differential device accommodation portion 14A is located rearward of the cylinder block 6 of the internal combustion engine 1.

The left case 13 of the present embodiment configures a first transmission case, and the right case 14 configures a second transmission case.

As shown in Figure 1 and Figure 2, the power transmission device 4 is disposed by being sandwiched between the internal combustion engine 1 and the right case 14 and is joined to the internal combustion engine 1 and the transmission 3.

The motor generator 2 is connected to the power transmission device 4. The motor generator 2 has a regeneration function of performing power generation by power transmitted from the transmission 3 via the power transmission device 4, while transmitting the power to the transmission 3 via the power transmission device 4.

Specifically, the motor generator 2 has a function as an electric motor that generates power by electricity supplied from a battery not illustrated via an inverter not illustrated, and a function as a generator that performs regenerative power generation by a rotational force (reverse power) that is inputted from driving wheels not illustrated.

The inverter converts a DC electric power supplied from the batter into a three-phase AC electric power to supply the AC electric power to the motor generator 2 and converts the three-phase AC electric power generated by the motor generator 2 into a DC electric power to charge the battery, by control of an ECU not illustrated. The battery is made up of a secondary battery such as a lithium-ion battery, for example.

The inverter and the battery of the present embodiment may be provided integrally with the motor generator 2, or may be unitized and attached to the cylinder block 6 of the internal combustion engine 1.

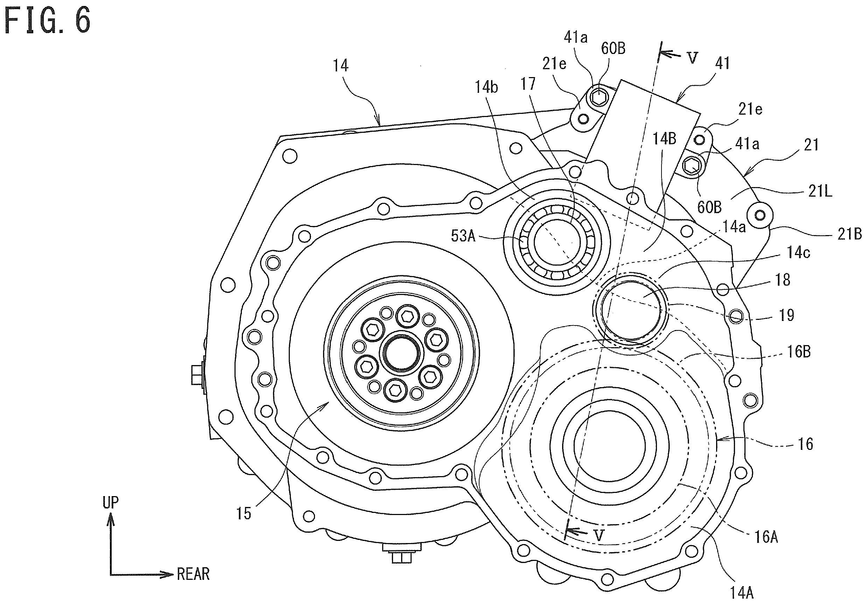

The transmission 3 includes a torque converter as a fluid coupling not illustrated, a forward/reverse switching mechanism 15 (see Figure 6), a non-stage transmission not illustrated such as a CVT (Continuously Variable Transmission).

The torque converter is accommodated in the right case 14, and the forward/reverse switching mechanism 15 and the non-stage transmission are accommodated in the left case 13.

The torque converter has a torque fluctuation absorption function and a torque amplification function with respect to drive torque that is inputted from the internal combustion engine 1, and transmits power to the forward/reverse switching mechanism 15. The forward/reverse switching mechanism 15 is configured by including a forward clutch not illustrated that enables the hybrid vehicle to travel in a forward direction, a reverse brake not illustrated that enables the hybrid vehicle to travel in a reverse direction, and a planetary gear mechanism not illustrated and disposed between a forward brake and the reverse brake.

The CVT includes a primary sheave, a secondary sheave, and a belt that is wound around the primary sheave and the secondary sheave all of which are not illustrated, and a transmission ratio is changed by changing groove widths of the primary sheave and the secondary sheave, and transmits the power from the internal combustion engine 1 to wheels not illustrated.

As shown in Figure 6, the right case 14 includes the differential device accommodation portion 14A that accommodates the differential device 16 and a vertical wall 14B, and the vertical wall 14B closes an internal space 13S (see Figure 1) of the left case 13.

The torque converter, the forward/reverse switching mechanism 15, and the primary sheave are disposed on a same axis.

A bearing support portion 14b is provided at the vertical wall 14B above the differential device accommodation portion 14A, and the bearing support portion 14b rotatably supports an end portion of a rotating shaft 17 of the secondary sheave via a bearing 53A.

A bearing support portion 14c is provided between the bearing support portion 14b and the differential device accommodation portion 14A in the up-down direction, and a rotating shaft 18 of a reduction driven gear 19 is rotatably supported by the bearing support portion 14c via a bearing not illustrated.

The rotating shaft 17 of the secondary sheave is provided with a reduction drive gear not illustrated, and the reduction drive gear is meshed with a reduction driven gear 19. The rotating shaft 18 of the reduction driven gear 19 is provided with a final drive gear not illustrated.

The differential device 16 includes a differential case 16A that accommodates a differential mechanism not illustrated, and a final ring gear 16B attached to an outer peripheral portion of the differential case 16A, and the final ring gear 16B is meshed with the final drive gear of the rotating shaft 18.

As shown in Figure 1, one end portions of left and right drive shafts 20L and 20R are connected to the differential mechanism. The left and right drive shafts 20L and 20R extend in the left-right direction from the differential device accommodation portion 14A, and drive wheels (front wheels) not illustrated are connected to other end portions of the left and right drive shafts 20L and 20R.

The power of the internal combustion engine 1 that is transmitted from the torque converter to the reduction drive gear via the forward/reverse switching mechanism 15, the primary sheave, the belt, and the secondary sheave is transmitted to a final ring gear 16B from the reduction drive gear via the reduction driven gear 19, and thereafter is transmitted to the left and right drive wheels via the left and right drive shafts 20L and 20R with differential rotation by the differential mechanism.

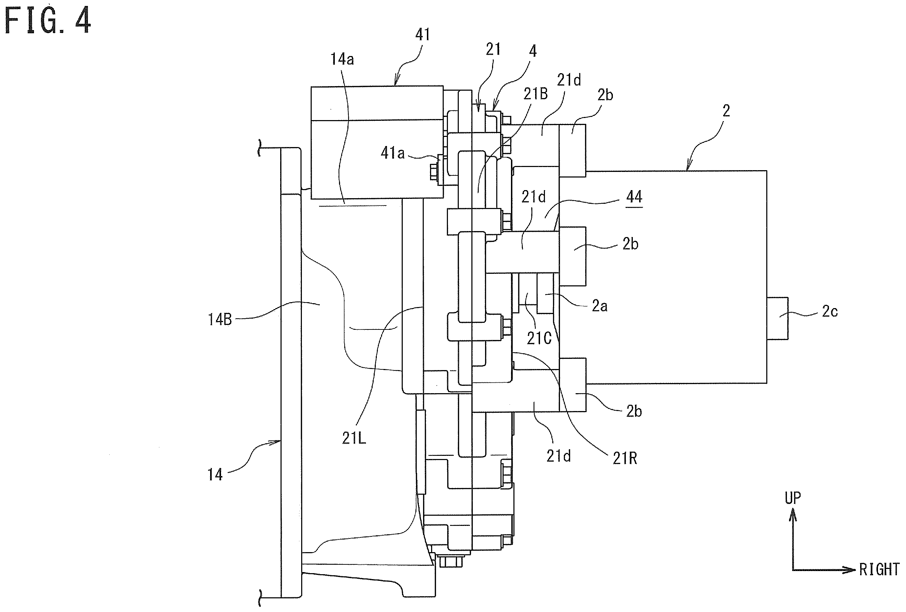

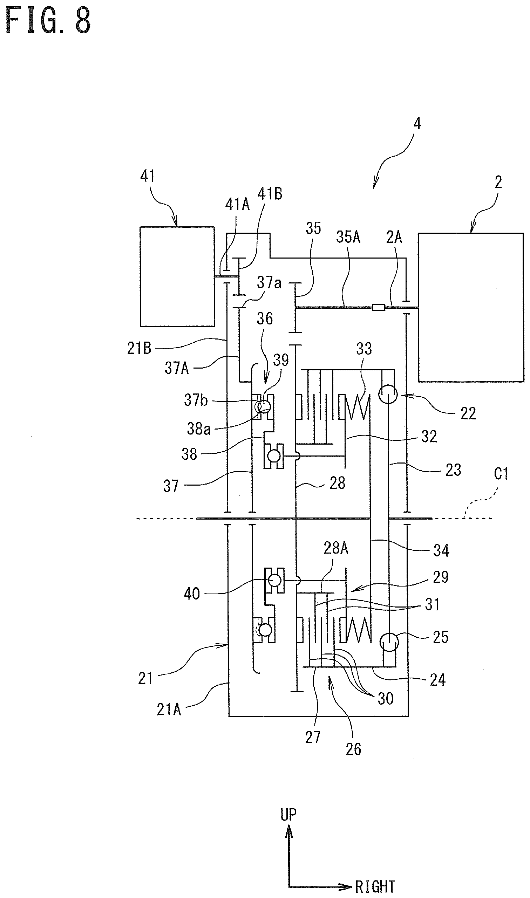

As shown in Figure 4 and Figure 8, the power transmission device 4 includes a case member 21 that forms an outer shell. As shown in Figure 8, a damper 22 is accommodated in the case member 21. The damper 22 has a damper input member 23, a damper output member 24, and a coil spring 25.

The crankshaft 1A is connected to the damper input member 23, and the damper input member 23 is rotated by the crankshaft 1A.

The damper output member 24 is connected to the damper input member 23 via the coil spring 25, and when the damper input member 23 rotates by rotation of the crankshaft 1A, the damper input member 23 transmits power to the damper output member 24 via the coil spring 25.
Accordingly, the damper output member 24 integrally rotates with the damper input member 23.

When a rotational fluctuation (torque fluctuation) of the internal combustion engine 1 occurs, the coil spring 25 elastically deforms in a circumferential direction and the damper input member 23 and the damper output member 24 relatively rotate, whereby the rotational fluctuation of the internal combustion engine 1 is absorbed.

In other words, the coil spring 25 elastically deforms in the circumferential direction of the damper input member 23 and the damper output member 24 to transmit torque while allowing a relative displacement in the circumferential direction of the damper input member 23 and the damper output member 24.

A wet clutch 26 is accommodated in the case member 21. The wet clutch 26 has a clutch input member 27, a driven gear 28 as a clutch output member, and a biasing member 29.

The wet clutch 26 is disposed on a transmission 3 side of the damper 22, and is disposed between the damper 22 and the transmission 3. That is, the damper 22 is disposed between the wet clutch 26 and the internal combustion engine 1. The wet clutch 26 of the present embodiment constitutes a clutch.

The clutch input member 27 is integrally formed with the damper output member 24, and extends in a cylindrical shape from an outer end portion of the damper output member 24 to the transmission 3 side.

A plurality of input side friction plates 30 are spline-fitted to an inner peripheral portion of the clutch input member 27, and the input side friction plates 30 are rotatable integrally with the clutch input member 27, and is movable in a rotation central axis direction with respect to the clutch input member 27.

The driven gear 28 is provided with a friction plate holding portion 28A, and the friction plate holding portion 28A extends in a tubular shape from the driven gear 28 to a damper 22 side.

A plurality of output side friction plates 31 are provided at an outer peripheral portion of the friction plate holding portion 28A. The output side friction plate 31 is disposed between the input side friction plates 30, and the output side friction plates 31 and the input side friction plates 30 are disposed to be alternately stacked in the axial direction.

The output side friction plates 31 are spline-fitted to the outer peripheral portion of the friction plate holding portion 28A, are integrally rotatable with the friction plate holding portion 28A, and are movable in the rotation central axis direction with respect to the friction plate holding portion 28A.

The torque converter is connected to the driven gear 28, and when the input side friction plates 30 and the output side friction plates 31 come into frictional contact with each other, the clutch input member 27 and the driven gear 28 are connected via the input side friction plates 30 and the output side friction plate 31.

Accordingly, the power of the internal combustion engine 1 is transmitted to the torque converter via the damper input member 23, the coil spring 25, the damper output member 24, the clutch input member 27, the input side friction plates 30, the output side friction plates 31, and the driven gear 28.

On the other hand, the driven gear 28 is meshed with a drive gear 35 of the motor generator 2, and power of the motor generator 2 is transmitted to the driven gear 28 via the drive gear 35. That is, the driven gear 28 is connected to the motor generator 2 via the drive gear 35 and moves in conjunction with the motor generator 2.

When the motor generator 2 is driven, the power of the motor generator 2 is transmitted to the torque converter via the drive gear 35 and the driven gear 28.

The driven gear 28 is formed with a larger diameter than the drive gear 35, and the power (rotation) of the motor generator 2 is reduced in speed by the drive gear 35 and the driven gear 28 and transmitted to the transmission 3. The drive gear 35 and the driven gear 28 of the present embodiment constitute the reduction gear pair.

The biasing member 29 has an annular pressing plate 32, a disc spring 33, and an annular retainer 34.

An outer end portion of the pressing plate 32 faces the input side friction plates 30, and the disc spring 33 biases the pressing plate 32 to the transmission 3 side (driven gear 28 side) so that the input side friction plates 30 and the output side friction plates 31 contact each other.

In other words, the biasing member 29 biases the input side friction plates 30 and the output side friction plates 31 to the driven gear 28 to maintain a state in which the clutch input member 27 and the driven gear 28 are connected via the input side friction plates 30 and the output side friction plates 31. The wet clutch 26 of the present embodiment is normally closed.

The retainer 34 is attached to the driven gear 28 by a pin or the like, and rotates integrally with the driven gear 28. The retainer 34 compresses and holds the disc spring 33 between the retainer 34 and the pressing plate 32, and thereby biases the pressing plate 32 to the transmission 3 side (driven gear 28 side) by the disc spring 33. Accordingly, the input side friction plates 30 and the output side friction plates 31 are brought into frictional contact with each other by the disc spring 33.

A release mechanism 36 is accommodated in the case member 21, and the release mechanism 36, the wet clutch 26, and the damper 22 are disposed in order of the release mechanism 36, the wet clutch 26, and the damper 22 from the transmission 3 side in the rotation central axis direction.

The release mechanism 36 has a cam plate 37, a thrust plate 38, a ball 39, a release bearing 40, and a motor 41. The release mechanism 36 of the present embodiment constitutes a release member, and the motor 41 constitutes an actuator.

The cam plate 37 is formed in an annular shape, and rotates within a certain range with a rotation central axis C1 as a rotation center by the motor 41. Here, the rotation central axis C1 is the rotation central axis of the crankshaft 1A, the damper 22, the wet clutch 26, and the cam plate 37, and a direction in which the rotation central axis extends is a rotation central axis direction.

A driven plate 37A is provided at an outer peripheral portion of the cam plate 37. The driven plate 37A protrudes outside in a radial direction from the cam plate 37 by a predetermined length within a predetermined angular range, and a tooth portion 37a is formed on an outer peripheral portion of the driven plate 37A.

A drive gear 41B is provided at a rotating shaft 41A of the motor 41, and the drive gear 41B meshes with the tooth portion 37a of the driven plate 37A.

The driven plate 37A is rotated by the drive gear 41B of the motor 41, whereby the cam plate 37 rotates within a certain range (a range of formation of the teeth portion 37a extending in the circumferential direction) with the rotation central axis C1 as a rotation center.

Cam grooves 37b are formed on a surface on the internal combustion engine 1 side of the cam plate 37. The cam grooves 37b are disposed to be spaced apart at fixed intervals in the circumferential direction with the rotation central axis C1 of the cam plate 37 as a center, and respectively extend in the circumferential direction (rotation direction of the internal combustion engine 1) with the rotation central axis C1 of the cam plate 37 as the center.

The cam groove 37b has an inclined surface in which a depth in the rotation central axis direction becomes shallower from one end portion toward the other end portion in the rotation direction of the internal combustion engine 1.

A cam groove 38a is formed in the thrust plate 38, and the ball 39 is accommodated in the cam groove 38a. That is, the ball 39 is disposed between the cam groove 37b and the cam groove 38a.

The cam groove 38a is formed in a semi-circular shape so that the ball 39 only rolls without moving in the circumferential direction.

The thrust plate 38 is spline-fitted to a spline member that is not illustrated and is provided in the case member 21, and is provided at the spline member to be non-rotatable and movable in the rotation central axis direction.

When the cam plate 37 is rotated from one side to the other side (clutch disconnection direction) by the motor 41, in the release mechanism 36, the cam groove 37b moves with respect to the ball 39, the ball 39 moves from the deep position of the inclined surface to a shallow position of the inclined surface, and a protrusion amount of the ball 39 from the cam plate 37 becomes large.

Accordingly, the ball 39 is pushed out to a driven gear 28 side, and the ball 39 which is pushed out presses the thrust plate 38 to the driven gear 28 side.

When the thrust plate 38 is pressed to the driven gear 28 side, a release bearing 40 presses the pressing plate 32 in a direction to be away from the driven gear 28, whereby the pressing plate 32 moves to the internal combustion engine 1 side against the biasing force of the disc spring 33, and the force from the pressing plate 32 does not act on the input side friction plate 30 and the output side friction plate 31.

Consequently, a gap occurs between the input side friction plate 30 and the output side friction plate 31, the wet clutch 26 is disconnected, and the power that is transmitted from the internal combustion engine 1 to the transmission 3 is cut off.

On the other hand, when the cam plate 37 is rotated from the other side to the one side (clutch connection direction) by the motor 41, in the release mechanism 36, the cam groove 37b moves with respect to the ball 39, the ball 39 moves to the deep position of the inclined surface from the shallow position of the inclined surface, and the protrusion amount of the ball 39 from the cam plate 37 becomes small.

At this time, the thrust plate 38, the release bearing 40, and the ball 39 are pushed to the transmission 3 side by the biasing force of the disc spring 33, and the pressing plate 32 moves from the internal combustion engine 1 side to the transmission 3 side.

Accordingly, the output side friction plate 31 is pressed to the transmission 3 side by the pressing plate 32, and the input side friction plate 30 and the output side friction plate 31 are sandwiched between the pressing plate 32 and the driven gear 28 to generate a strong frictional force.

As a result, the wet clutch 26 is connected, the power of the internal combustion engine 1 is transmitted to the transmission 3 via the wet clutch 26.

In this way, in the state in which the wet clutch 26 is connected, the damper output member 24 is connected to the torque converter (that is, the transmission 3) via the clutch input member 27, the input side friction plate 30, the output side friction plate 31, and the driven gear 28.

Consequently, when a rotation fluctuation (torque fluctuation) of the internal combustion engine 1 occurs, the coil spring 25 elastically deforms in the circumferential direction and the damper input member 23 and the damper output member 24 relatively rotate via the coil spring 25, whereby the power of the internal combustion engine 1 is transmitted to the transmission 3 via the wet clutch 26 while the rotation fluctuation of the internal combustion engine 1 is being absorbed.

As above, the cam plate 37 rotates between the clutch connection position where the wet clutch 26 is in a connected state and the clutch disconnection position where it is in a disconnected state by the motor 41.

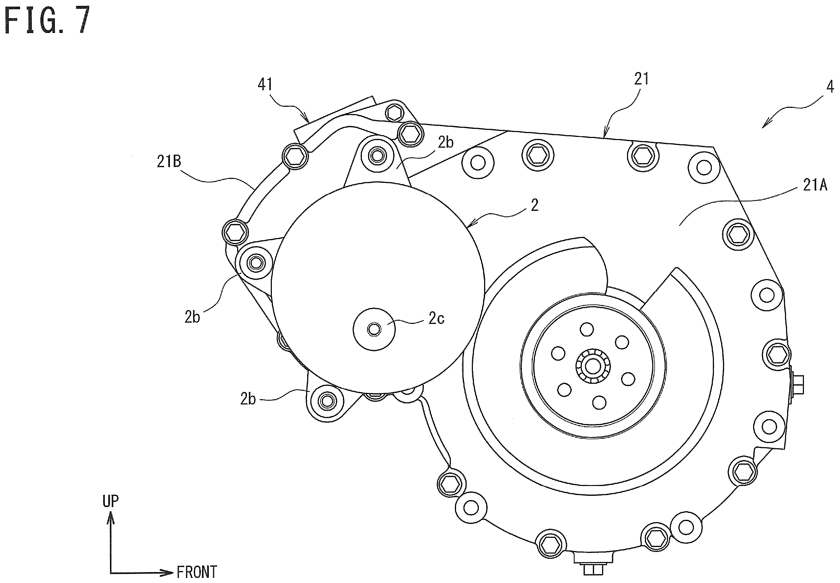

As shown in Figure 7 and Figure 8, the case member 21 includes the case body portion 21A and a bulge portion 21B. In the case body portion 21A, the damper 22, the wet clutch 26, the biasing member 29, and the release mechanism 36 are accommodated.

The driven gear 28 of the present embodiment serves as both a member that transmits power between the internal combustion engine 1 and the transmission 3, and a member that transmits power between the motor generator 2 and the transmission 3.

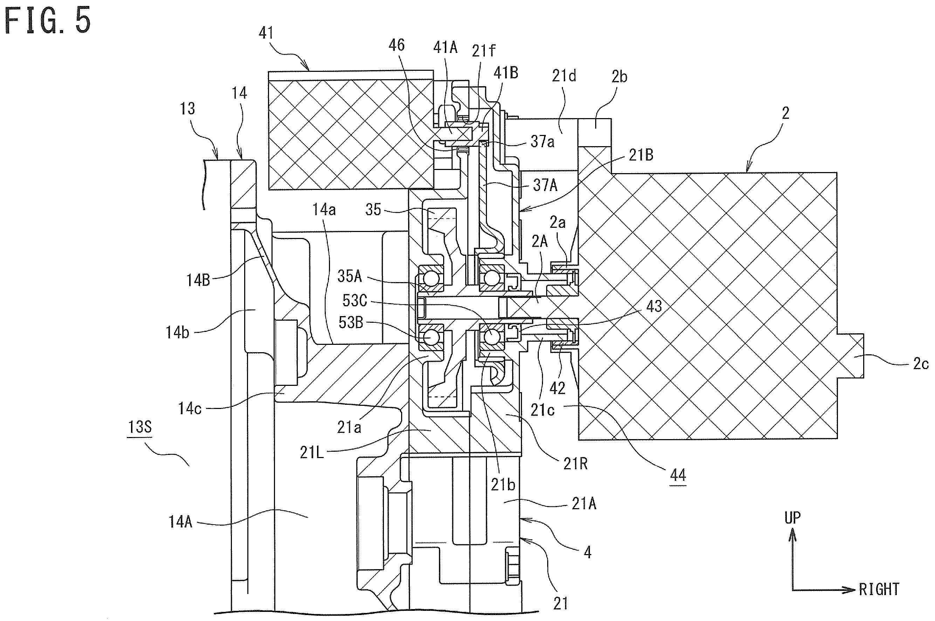

As shown in Figure 5, the bulge portion 21B bulges outward in the radial direction from an upper portion of the case body portion 21A. Specifically, as shown in Figure 2, the case body portion 21A is provided between the internal combustion engine 1 and the transmission 3 to be sandwiched between the internal combustion engine 1 and the transmission 3, and the bulge portion 21B extends more rearward than the cylinder block 6 of the internal combustion engine 1 from the case body portion 21A (see Figure 3).

As shown in Figure 5 and Figure 8, the drive gear 35 and the driven plate 37A are accommodated in an inside of the bulge portion 21B.

In other words, the driven plate 37A that forms a part of the release mechanism 36, and the drive gear 35 that forms a part of the reduction gear pair are accommodated in the bulge portion 21B, and the release mechanism 36 and the reduction gear pair are accommodated in the case body portion 21A and the bulge portion 21B.

As shown in Figure 5, bearing support portions 21a and 21b are formed at inner peripheral surfaces of a left side wall 21L and a right side wall 21R of the bulge portion 21B respectively, and left and right end portions of a rotating shaft 35A of the drive gear 35 are rotatably supported at the bearing support portions 21a and 21b via bearings 53B and 53C, respectively.

The rotating shaft 35A is formed into a hollow shape, and an inner peripheral spline is formed in an inner peripheral portion of a right end portion of the rotating shaft 35A.

A tubular fitting portion 21c is formed at the right side wall 21R of the bulge portion 21B, and the tubular fitting portion 21c protrudes from the right side wall 21R to the motor generator 2 side.

The motor generator 2 is provided with a tubular fitting portion 2a having a larger diameter than the tubular fitting portion 21c, and the tubular fitting portion 21c is fitted to an inner peripheral portion of the tubular fitting portion 2a via a bush 42. This makes it possible to protect a connection portion of the rotating shaft 35A and a motor shaft 2A of the motor generator 2, and to prevent foreign mater such as water, a stone (flying stone), and dirt from entering an inside of the tubular fitting portion 21c from outside.

Furthermore, an oil seal 43 is provided between a left end portion (base end portion) of the tubular fitting portion 21c on the motor generator 2 side, with respect to the bearing 53C, and the bulge portion 21B is sealed liquid-tightly by the oil seal 43. An inside of the case member 21 is filled with lubricating oil, and the damper 22 and the wet clutch 26 are lubricated with the lubricating oil.

The motor shaft 2A of the motor generator 2 is disposed inside of the tubular fitting portion 21c. An outer peripheral spline is formed on a tip portion of the motor shaft 2A, and the motor shaft 2A is spline-fitted to the rotating shaft 35A of the drive gear 35. That is, the motor shaft 2A and the rotating shaft 35A are disposed on a same axis.

A spline fitting portion of the motor shaft 2A and the rotating shaft 35A is lubricated with grease not illustrated, and the power of the motor generator 2 is transmitted from the motor shaft 2A to the drive gear 35 via the rotating shaft 35A. The motor shaft 2A of the present embodiment constitutes a rotating shaft of the rotating electric machine.

As shown in Figure 4, three boss portions 21d are provided on the right side wall 21R of the bulge portion 21B, and the boss portions 21d protrude from the right side wall 21R to the motor generator 2 side.

Three boss portions 2b are formed at the motor generator 2, and the boss portions 2b of the motor generator 2 are fastened to the boss portions 21d of the bulge portion 21B by bolts not illustrated.

The motor generator 2 is spaced from the bulge portion 21B by the boss portion 21d extending in the vehicle width direction and the tubular fitting portion 21c and is disposed to face the bulge portion 21B (right side wall 21R) in the vehicle width direction. Consequently, a space portion 44 is formed between the motor generator 2 and the bulge portion 21B.

The tubular fitting portion 21c of the bulge portion 21B and the tubular fitting portion 2a of the motor generator 2 are disposed in the space portion 44, and the tubular fitting portion 2a and the tubular fitting portion 21c constitute a connection portion that connects the motor generator 2 and the bulge portion 21B.

As shown in Figure 1, a boss portion 2c is formed at a right end portion of the motor generator 2, and the boss portion 2c is fastened to a bracket 45.

The bracket 45 is fastened to the cylinder block 6 by bolts 60A, and the motor generator 2 is fixed to the cylinder block 6 by the bracket 45. That is, the motor generator 2 is fixed to the bulge portion 21B and the cylinder block 6.

As shown in Figure 5, an opening portion 21f is formed in the left side wall 21L of the bulge portion 21B, and the drive gear 41B of the motor 41 is inserted into the bulge portion 21B through the opening portion 21f.

An oil seal 46 is provided between the drive gear 41B and the opening portion 21f, and the inside of the bulge portion 21B is sealed liquid-tightly by the oil seal 46.

As shown in Figure 6, two boss portions 21e are formed at the left side wall 21L of the bulge portion 21B. Two boss portions 41a are formed at the motor 41, and the boss portions 41a are fastened to the boss portions 21e by bolts 60B. Accordingly, the motor 41 is fixed to the bulge portion 21B.

As the motor 41, a motor that is smaller and lighter than the motor generator 2 is used, and the motor 41 is attached to the bulge portion 21B in a cantilevered state (state in which only one end portion is fixed).

On the other hand, the motor generator 2 which has a heavier weight than the motor 41 is fixed to the bulge portion 21B at the three locations, and is further fixed to the cylinder block 6 at the one location. Since a protruding right end portion is fixed to the cylinder block 6, stiffness in support of the motor generator 2 is higher as compared to stiffness in support of the motor 41.

Consequently, it is possible to reinforce the bulge portion 21B by the motor generator 2, and it is possible to enhance stiffness of the bulge portion 21B. Accordingly, even if the motor 41 is fixed to the bulge portion 21B in a cantilevered manner, it is possible to enhance stiffness in support of the motor 41 by the bulge portion 21B with high stiffness, and it is possible to restrain the motor 41 from vibrating by vibration of the internal combustion engine 1. As a result, it is possible to improve durability of the motor 41.

As shown in Figure 1, the motor generator 2 is disposed outward of the case member 21, on a right side wall 21R side (one side) of the bulge portion 21B. Furthermore, the motor 41 is disposed outside of the case member 21, on a left side wall 21L side (other side) of the bulge portion 21B on an opposite side to the motor generator 2.

Specifically, the motor generator 2 is attached to the bulge portion 21B so that an axial direction thereof is along the left-right direction, is disposed to protrude from the bulge portion 21B to behind the cylinder block 6, and is disposed to extend along the cylinder block 6 and face the cylinder block 6 in the front-rear direction. That is, the motor generator 2 is disposed on the internal combustion engine 1 side with respect to the bulge portion 21B.

The motor 41 protrudes from the bulge portion 21B to the transmission 3 side and is disposed upward of the transmission 3.

As above, the motor generator 2 and the motor 41 are disposed to be distributed on the left and right of the bulge portion 21B. The motor generator 2 and the motor 41 are disposed with the bulge portion 21B therebetween and are disposed to protrude in a perpendicular direction (left-right direction) respectively from the surface of the bulge portion 21B.

As shown in Figure 2, the motor generator 2 and the catalyst converter 11 are disposed at the same position in a position in the left-right direction.

In other words, the motor generator 2 is disposed to sandwich the internal combustion engine 1 with the catalyst converter 11 in the front-rear direction, and the motor generator 2 and the catalyst converter 11 are disposed in front of and behind the cylinder block 6.

Furthermore, as shown in Figure 3, the motor generator 2 and the catalyst converter 11 are disposed at a same height position in a position in the up-down direction. The motor generator 2 and the catalyst converter 11 are disposed at a substantially equal distance from the crankshaft 1A of the internal combustion engine 1.

The motor generator 2 and the catalyst converter 11 are disposed at a substantially equal distance from an axis (virtual straight line L) passing through the internal combustion engine side mount device 51 and the transmission side mount device 52. That is, the motor generator 2 and the catalyst converter 11 are disposed in a well-balanced manner in front of and behind the axis of mount with respect to the axis of the mount.

As shown in Figure 2 and Figure 3, the motor generator 2 is disposed above the right drive shaft 20R.

Furthermore, the motor generator 2 is disposed below the intake manifold 10, and is sandwiched between the right drive shaft 20R and the intake manifold 10 in the up-down direction. The right drive shaft 20R of the present embodiment constitutes a drive shaft.

A rear surface side of the internal combustion engine 1 where the motor generator 2 is disposed is a surface on an intake side where the intake manifold 10 is disposed and has an ambient temperature lower than the front surface side of the internal combustion engine 1 where the radiator 5 and the catalyst converter 11 are disposed.

The motor generator 2 is of an air-cooled type, with an air intake port not illustrated formed in a left end portion, and an air discharge port not illustrated formed in a right end portion.

Accordingly, it is possible to efficiently cool the motor generator 2 by passing air with a relatively low temperature in the space portion 44 from the air intake port to an inside of the motor generator 2 and discharging the air from the air discharge port. Furthermore, it is possible to cool the motor generator 2 from outside by exposing a periphery of the motor generator 2 to an air current while traveling.

As shown in Figures 3 and 4, the space portion 44 is an open space except for the front side (cylinder block 6 side), where it is possible to easily take in ambient air having a relatively low temperature, and it is possible to more efficiently improve the cooling efficiency of the motor generator 2.

As shown in Figure 1 and Figure 5, the motor 41 disposed on the transmission 3 side is positioned above the upper wall 14a of the right case 14 and extends between the left case 13 and the bulge portion 21B in the left-right direction (vehicle width direction).

As shown in Figure 5 and Figure 6, the vertical wall 14B of the right case 14 extends upward from the upper wall 14a of the right case 14 to face the motor 41 in the axial direction of the rotating shaft 17 of the secondary sheave. That is, the vertical wall 14B is disposed side by side with the motor 41 in the vehicle width direction.

The power transmission device 4 of the present embodiment brings the wet clutch 26 into a connected state during an engine traveling time when the hybrid vehicle is caused to travel by the power of the internal combustion engine 1.

Accordingly, the power of the internal combustion engine 1 is transmitted to the torque converter via the damper input member 23, the coil spring 25, the damper output member 24, the clutch input member 27, the input side friction plate 30, the output side friction plate 31, and the driven gear 28, and thereafter is transmitted from the torque converter to the continuously variable transmission via the forward/reverse switching mechanism 15.

Furthermore, during a motor traveling time when the internal combustion engine 1 is stopped and the hybrid vehicle is caused to travel by the power of the motor generator 2, the wet clutch 26 is brought into a disconnected state.

Accordingly, the power of the motor generator 2 is transmitted to the torque converter via the rotating shaft 35A, the drive gear 35, and the driven gear 28, and thereafter is transmitted from the torque converter to the continuously variable transmission via the forward/reverse switching mechanism 15.

Furthermore, during a hybrid traveling time when the hybrid vehicle is caused to travel by the power of the internal combustion engine 1 and the motor generator 2, the wet clutch 26 is brought into a connected state, and thereby the power is transmitted to the transmission 3 from the internal combustion engine 1 and the motor generator 2 by a power transmission route from the internal combustion engine 1 to the transmission 3 described above, and a power transmission route similar to a power transmission route from the motor generator 2 to the transmission 3.

In the hybrid traveling, the internal combustion engine 1 can be operated in a fuel-efficient state, and acceleration performance of the hybrid vehicle can be improved.

Furthermore, during a deceleration time (regeneration time) of the hybrid vehicle, the wet clutch 26 is brought into a disconnected state to thereby completely separate the internal combustion engine 1 from the driving wheels.

Accordingly, the power of the driving wheels is transmitted to the transmission 3 via the left and right drive shafts 20L and 20R, and the differential device 16. The power of the driving wheels is transmitted from the transmission 3 to the motor generator 2 via the driven gear 28, and regeneration of the motor generator 2 is performed.

Since during the deceleration time of the hybrid vehicle, the internal combustion engine 1 and the driving wheels are completely separated, and engine braking does not work, energy loss by engine braking is suppressed, the power transmitted from the transmission 3 to the power transmission device 4 is transmitted to only the motor generator 2, and can be efficiently regenerated in the motor generator 2.

Next, an effect of the power transmission device 4 of the hybrid vehicle of the present embodiment will be described.

The power transmission device 4 of the present embodiment is disposed between the internal combustion engine 1 and the transmission 3, and includes the wet clutch 26 capable of connecting and disconnecting transmission of power between the internal combustion engine 1 and the transmission 3, the drive gear 35 and the driven gear 28 that transmit power between the motor generator 2 and the transmission 3, the release mechanism 36 that connects and disconnects the wet clutch 26, and the case member 21.

The case member 21 has the motor 41 that operates the release mechanism 36, the case body portion 21A that accommodates the damper 22, the wet clutch 26, the drive gear 35, the driven gear 28, and the release mechanism 36, and the bulge portion 21B that bulges outward in the radial direction from the case body portion 21A and accommodates the driven plate 37A that is a part of the release mechanism 36.

In addition, the motor generator 2 is disposed on one side of the bulge portion 21B, outside of the case member 21, and the motor 41 is disposed on the other side of the bulge portion 21B on the opposite side to the motor generator 2.

In this way, by disposing the motor generator 2 and the motor 41 outside of the case member 21, it is possible to restrain the thickness of the case body portion 21A that accommodates the damper 22, the wet clutch 26, the driven gear 28, and the release mechanism 36 from increasing, and to restrain the power transmission device 4 from increasing in size.

In other words, by gathering the damper 22, the wet clutch 26, the driven gear 28, and the release mechanism 36 together in the case body portion 21A, attaching the motor generator 2 and the motor 41 externally to the bulge portion 21B, and accommodating the cam plate 37 driven by the motor 41 in the bulge portion 21B, it is possible to decrease the thickness of the case body portion 21A and to dispose the power transmission device 4 between the internal combustion engine 1 and the transmission 3.

Consequently, it is possible to shorten a total length (dimension in the vehicle width direction) of the internal combustion engine 1, the transmission 3, and the power transmission device 4.

As a result, it is possible to reduce a size of the internal combustion engine 1 and the transmission 3 including the power transmission device 4, and it is possible to improve mountability of the internal combustion engine 1 and the transmission 3 in the hybrid vehicle.

Furthermore, since the motor generator 2 and the motor 41 are attached to both left and right surfaces of the bulge portion 21B, it is possible to shorten the dimension in the radial direction of the case member 21 as compared to a case in which the bulge portion is separated in the circumferential direction of the driven gear 28 and the motor generator 2 and the motor 41 are attached to respective bulge portions.

As a result, it is possible to further reduce the size of the internal combustion engine 1 and the transmission 3 including the power transmission device 4, and it is possible to more effectively improve the mountability of the internal combustion engine 1 and the transmission 3 in the hybrid vehicle.

Furthermore, according to the power transmission device 4 of the present embodiment, the motor generator 2 is disposed on the internal combustion engine 1 side with respect to the bulge portion 21B, and the motor 41 is disposed on the transmission 3 side with respect to the bulge portion 21B.

Accordingly, if the motor generator 2, which is a relatively heavy object, is disposed on the internal combustion engine 1 side where there are fewer surrounding on-board components, that is, on the rear surface on the intake side of the cylinder block 6, the motor generator 2 can be disposed closer to the cylinder block 6, and the power transmission device 4 can be restrained from increasing in size.

Furthermore, according to the power transmission device 4 of the present embodiment, the left drive shaft 20L and the right drive shaft 20R are connected to the transmission 3.

In addition, the motor generator 2 protrudes from the bulge portion 21B to behind the cylinder block 6, and the motor generator 2 is disposed above the right drive shaft 20R.

Accordingly, the motor generator 2 that is larger than the motor 41 can be disposed in a dead space above the right drive shaft 20R, which makes it unnecessary to secure a wide space for disposing the motor generator 2 around the internal combustion engine 1 and the transmission 3.

Accordingly, it is possible to restrain the motor generator 2 from interfering with the on-board components around the internal combustion engine 1. In addition, it is possible to achieve further reduction in size of the internal combustion engine 1 and the transmission 3 including the power transmission device 4, and it is possible to more effectively improve mountability of the internal combustion engine 1 and the transmission 3 in the hybrid vehicle.

Furthermore, according to the power transmission device 4 of the present embodiment, the intake manifold 10 is connected to the rear surface of the internal combustion engine 1.

In addition, the motor generator 2 protrudes from the bulge portion 21B to behind the cylinder block 6 and is disposed below the intake manifold 10.

Accordingly, it is possible to dispose the motor generator 2 larger than the motor 41 on the rear surface of the internal combustion engine 1 on the intake manifold 10 side where the ambient temperature is lower than that on the radiator 5 and catalyst converter 11 side.

Consequently, it is possible to restrain the motor generator 2 from being exposed to a high temperature and improve durability of the motor generator 2.

Furthermore, according to the power transmission device 4 of the present embodiment, the motor generator 2 is disposed below the intake manifold 10, and above the right drive shaft 20R.

Accordingly, in addition to that the motor generator 2 larger than the motor 41 can be disposed in the dead space above the right drive shaft 20R, the motor generator 2 can be disposed around the internal combustion engine 1 on the intake manifold 10 side where the ambient temperature is lower than that on the radiator 5 and catalyst converter 11 side.

Consequently, it is possible to restrain the motor generator 2 from being exposed to a high temperature and improve the durability of the motor generator 2.

Furthermore, according to the power transmission device 4 of the present embodiment, the release mechanism 36 has the cam plate 37 that rotates between the clutch connection position where the wet clutch 26 is in the connected state and the clutch disconnection position where the clutch 26 is in the disconnected state.

In addition, the motor 41 is formed to be smaller than the motor generator 2, is configured to be able to rotate the cam plate 37 and is disposed outward of the motor generator 2 in the radial direction.

In this way, the motor 41 that is lighter in weight than the motor generator 2 is disposed outward of the motor generator 2 in the radial direction, and the motor generator 2 that is heavier in weight than the motor 41 can be disposed inward in the radial direction.

In other words, since the motor generator 2 can be disposed closer to the rotation central axis side than the motor 41, vibration of the motor generator 2 can be more effectively restrained.

Furthermore, according to the power transmission device 4 of the present embodiment, the motor 41 is fixed to the bulge portion 21B.

Accordingly, it can be made unnecessary to attach the motor 41 to the transmission case 12 of the transmission 3, and it can be made unnecessary to add a structure for attaching the motor 41 to the transmission case 12 and secure an attaching surface for the motor 41 with high precision. As a result, it is possible to improve workability of manufacture work of the transmission 3 and improve productivity of the transmission 3.

Furthermore, according to the power transmission device 4 of the present embodiment, the transmission 3 has the left case 13, and the right case 14 that is disposed on the internal combustion engine 1 side with respect to the left case 13 and is fastened to the left case 13.

The right case 14 has the upper wall 14a located at the lower position than the upper wall 13a of the left case 13, and the motor 41 is located above the upper wall 14a of the right case 14 and extends between the left case 13 and the bulge portion 21B in the left-right direction.

Accordingly, it is possible to dispose the motor 41 in the dead space formed between the internal combustion engine 1 and the transmission 3 in the vehicle width direction, and it can be made unnecessary to secure a wide space for disposing the motor 41 around the internal combustion engine 1 and the transmission 3.

Consequently, it is possible to restrain the motor 41 from interfering with the on-board components around the transmission 3. In addition, it is possible to achieve further reduction in size of the internal combustion engine 1 and the transmission 3 including the power transmission device 4, and it is possible to more effectively improve the mountability of the internal combustion engine 1 and the transmission 3 in the hybrid vehicle.

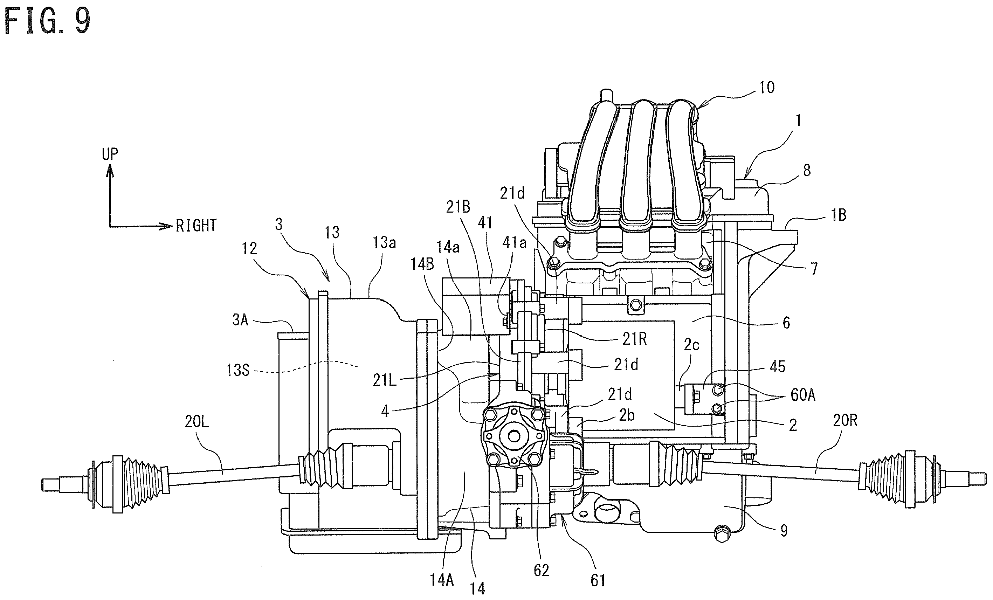

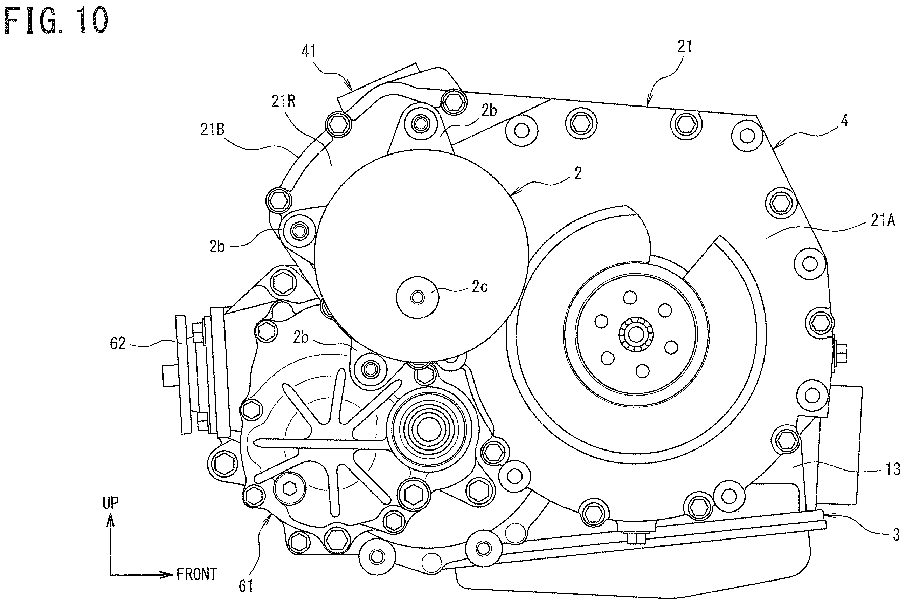

Note that the power transmission device 4 of the present embodiment is applied to the transmission 3 for a two-wheel drive vehicle, but may be applied to the transmission 3 for a four-wheel drive vehicle as shown in Figure 9 and Figure 10.

In this case, the motor generator 2 may be disposed in the dead space above a transfer device 61. That is, as shown in Figure 9 and Figure 10, the transfer device 61 may be disposed below the bulge portion 21B. The transfer device 61 is provided with a connection portion 62 to which a propeller shaft not illustrated that transmits power of the internal combustion engine 1 to rear wheels not illustrated.

Although the embodiment of the present invention is disclosed, it is obvious to those skilled in the art that modifications can be added without departing from the scope of the present invention. All such modifications and equivalents are intended to be encompassed by the following claims.

### [Reference Signs List]

1 internal combustion engine, 2 motor generator (rotating electric machine), 3 transmission, 10 intake manifold, 13 left case (first transmission case), 13a upper wall (upper wall of the first transmission case), 14 right case (second transmission case), 14a upper wall (upper wall of the second transmission case), 20R right drive shaft (drive shaft), 21 case member, 21A case body portion, 21B bulge portion, 26 wet clutch (clutch), 28 driven gear (reduction gear pair), 35 drive gear (reduction gear pair), 36 release mechanism (release member), 37 cam plate, 41 motor (actuator)

## Claims

1. A power transmission device (4) for a hybrid vehicle, the power transmission device (4) being disposed between an internal combustion engine (1) and a transmission (3), the power transmission device (4) comprising a clutch (26) that can connect and disconnect transmission of power between the internal combustion engine (1) and the transmission (3), a reduction gear pair (28, 35) that transmits power between a rotating electric machine (2) and the transmission (3), a release member (36) that connects and disconnects the clutch (26), an actuator (41) that operates the release member (36), and a case member (21), **characterized in that**
the case member (21) has a case body portion (21A) that accommodates the clutch (26), the reduction gear pair (28, 35), and the release member (36), and a bulge portion (21B) that bulges outward in a radial direction from the case body portion (21A) and accommodates a part of the release member (36), and
the rotating electric machine (2) is disposed on one side of the bulge portion (21B) outside the case member (21), and the actuator (41) is disposed on the other side of the bulge portion (21B) on an opposite side to the rotating electric machine (2).

2. The power transmission device (4) for a hybrid vehicle as claimed in claim 1, wherein
the rotating electric machine (2) is disposed on an internal combustion engine (1) side with respect to the bulge portion (21B), and
the actuator (41) is disposed on a transmission (3) side with respect to the bulge portion (21B).

3. The power transmission device (4) for a hybrid vehicle as claimed in claim 1 or claim 2, wherein
a drive shaft (21R) is connected to the transmission (3),
the rotating electric machine (2) protrudes from the bulge portion (21B) to behind the internal combustion engine (1), and
the rotating electric machine (2) is disposed above the drive shaft (20R).

4. The power transmission device (4) for a hybrid vehicle as claimed in claim 1 or claim 2, wherein
an intake manifold (10) is connected to a rear surface of the internal combustion engine (1), and
the rotating electric machine (2) protrudes from the bulge portion (21B) to behind the internal combustion engine (1) and is disposed below the intake manifold (10).

5. The power transmission device (4) for a hybrid vehicle as claimed in claim 4, wherein
a drive shaft (20R) is connected to the transmission (3),
the rotating electric machine (2) protrudes from the bulge portion (21B) to behind the internal combustion engine (1), and
the rotating electric machine (2) is disposed below the intake manifold (10) and above the drive shaft (20R).

6. The power transmission device (4) for a hybrid vehicle as claimed in claim 1 or claim 2, wherein
the release member (36) has a cam plate (37) that rotates between a clutch connection position where the clutch (26) is in a connected state and a clutch disconnection position where the clutch (26) is in a disconnected state, and
the actuator (41) is formed to be smaller than the rotating electric machine (2), comprises a motor that can rotate the cam plate (37) and is disposed more outward in the radial direction than the rotating electric machine (2).

7. The power transmission device (4) for a hybrid vehicle as claimed in claim 1 or claim 2, wherein the actuator (41) is fixed to the bulge portion (21B).

8. The power transmission device (4) for a hybrid vehicle as claimed in claim 1 or claim 2, wherein
the transmission (3) has a first transmission case (13), and a second transmission case (14) that is disposed on an internal combustion engine (1) side with respect to the first transmission case (13) and is fastened to the first transmission case (13),
the second transmission case (14) has an upper wall (14a) located at a lower position than an upper wall (13a) of the first transmission case (13), and
the actuator (41) is located above the upper wall (14a) of the second transmission case (14) and extends between the first transmission case (13) and the bulge portion (21B) in a left-right direction.
